# EUROPÄISCHE PATENTSCHRIFT

(11) **EP 2 844 591 B1**
(45) Veröffentlichungstag und Bekanntmachung des Hinweises auf die Patenterteilung: **07.09.2016**
(21) Anmeldenummer: 13713388.0
(22) Anmeldetag: 20.03.2013
(51) Int. Cl.: B65G 15/58, B65G 17/46, B65G 21/20

(54) **TRANSPORTVORRICHTUNG MIT MAGNETORHEOLOGISCHER FLÜSSIGKEIT**
TRANSPORT DEVICE WITH MAGNETORHEOLOGICAL FLUID
DISPOSITIF DE TRANSPORT MUNI D' UN FLUIDE MAGNETORHÉOLOGIQUE

(30) Priorität: 03.05.2012 DE 102012207326
(43) Veröffentlichungstag der Anmeldung: 11.03.2015
(73) Patentinhaber: Robert Bosch GmbH, 70442 Stuttgart (DE)
(72) Erfinder: BOEHM, Laura, 71069 Sindelfingen (DE); HANISCH, Markus, 70736 Fellbach (DE)
(86) Internationale Anmeldenummer: PCT/EP2013/055760
(87) Internationale Veröffentlichungsnummer: WO 2013/164126

(56) Entgegenhaltungen:
- DE-A1-102008 020 628
- GB-A- 2 317 157
- US-B2- 6 827 822

## Beschreibung

### Stand der Technik

Die vorliegende Erfindung betrifft eine Transportvorrichtung mit einer magnetorheologischen Flüssigkeit, welche verfestigbar ist, um zu transportierende Gegenstände zumindest teilweise zu umschließen und zu transportieren.

Im Stand der Technik sind verschiedenste Transportaufgaben zu bewältigen. Ein Problemkreis bei der Handhabung von leicht zerbrechlichen Gütern ist beispielsweise die Handhabung derartiger Güter, ohne diese zu beschädigen. Beispielsweise in der Verpackungstechnik müssen Glasbehältnisse oder Vials, häufig gefüllt mit toxischen Stoffen oder gefährlichen Medikamenten, ohne Beschädigung gehandhabt werden. Dies wird bisher dadurch gelöst, dass jeweils speziell konstruierte Transportvorrichtungen vorgesehen werden, welche exakt auf die geometrischen Verhältnisse und Materialien der Behältnisse abgestimmt sind. Dies führt jedoch dazu, dass bei einem Wechsel eines Formats der Behältnisse auch die entsprechenden Transportvorrichtungen vorgehalten und gewechselt werden müssen, was zu Maschinenstillstandszeiten und erhöhten Anschaffungskosten führt.

Aus dem Stand der Technik ist es weiterhin bekannt, magnetorheologische Flüssigkeiten, beispielsweise bei Stoßdämpfern von Fahrzeugen, zu verwenden. Diese magnetorheologischen Flüssigkeiten reagieren auf magnetische Felder und können dadurch versteift werden, so dass sich die Dämpfungseigenschaften des Stoßdämpfers ändern. Nach Entfernen des magnetischen Feldes nimmt die magnetorheologische Flüssigkeit wieder ihre Ausgangsform ein und weist wieder ausreichende Fließfähigkeiten auf.

Einschub für die Beschreibungseinleitung (anzufügen an Seite 1, Zeile 36 der ursprünglichen Beschreibung)

Aus der GB 2317157 zeigt eine elektrorheologische Flüssigkeit. Weiterhin offenbart sie einen Greifer mit zwei federartigen Greifarmen, zwischen denen ein Element mit einer elektrorheologische Flüssigkeit gespannt ist.

### Offenbarung der Erfindung

Die erfindungsgemäße Transportvorrichtung mit den Merkmalen des Anspruchs 1 weist demgegenüber den Vorteil auf, dass mit der Transportvorrichtung problemlos Gegenstände mit verschiedensten geometrischen Formen und aus verschiedensten Materialien, insbesondere auch zerbrechlichen Materialien, wie Glas, transportiert werden können. Dabei ist die erfindungsgemäße Transportvorrichtung derart ausgebildet, dass sie zumindest teilweise die zu transportierenden Gegenstände umschließen kann. Dies wird erfindungsgemäß dadurch erreicht, dass die Transportvorrichtung eine Magnetfeldvorrichtung zur Erzeugung eines Magnetfelds und eine flexible Schicht mit einer magnetorheologischen Flüssigkeit aufweist. Die magnetorheologische Flüssigkeit ist mittels der Magnetfeldvorrichtung magnetisierbar, so dass die magnetische Flüssigkeit eine Viskositätsänderung derart erfährt, um zu transportierende Gegenstände zumindest teilweise zu umschließen und zu halten. Dadurch können die zu transportierenden Gegenstände unabhängig von ihrer geometrischen Form sicher und sanft transportiert werden, so dass auch zerbrechliche Gegenstände ohne Gefahr einer Beschädigung transportiert werden können. Es sei angemerkt, dass unter dem Begriff "Flüssigkeit" erfindungsgemäß sowohl tatsächliche Flüssigkeiten als auch ein Gel oder ein anderes zähflüssiges Fluid verstanden wird. Weiter ist die flexible Schicht mit der magnetorheologischen Flüssigkeit an einem Transportband angeordnet, wobei das Transportband vorzugsweise einen Tragriemen umfasst, an dessen Außenseite die flexible Schicht angeordnet ist. Hierdurch kann beispielsweise ein umlaufendes Transportband bereitgestellt werden, wobei beispielsweise auch ein seitlicher Transport oder ein Transport mit dem Untertrum des umlaufenden Transportbandes möglich ist. Ebenfalls ist auch ein vertikaler Transport der Gegenstände möglich.

Die Unteransprüche zeigen bevorzugte Weiterbildungen der Erfindung.

Vorzugsweise ist die Magnetfeldvorrichtung derart angeordnet, dass nur Teilbereiche der magnetorheologischen Flüssigkeit magnetisierbar sind. Hierdurch können Transportaufgaben gelöst werden, bei denen beispielsweise bei einer Rückführung der Transportvorrichtung keine hohe Viskosität bzw. Versteifung der magnetorheologischen Flüssigkeit notwendig ist, z.B. bei umlaufenden Transportbändern.

Weiter bevorzugt weist die die magnetorheologischen Flüssigkeit umfassende flexible Schicht eine Oberfläche mit einer Vielzahl von Mikro-Strukturen mit vorstehenden Bereichen auf. Die vorstehenden Bereiche der Mikro-Strukturen kommen dabei bei einem Kontakt der Oberfläche mit dem zu transportierenden Gegenstand derart mit dem Gegenstand in Berührung, dass aufgrund der auftretenden Van-der-Waals-Kräfte der Gegenstand an der Oberfläche anhaftet. Hierdurch wird zusätzlich noch eine Sicherheit durch die zusätzliche äußere Schicht von Mikro-Strukturen für ein Halten der Gegenstände während des Transports bereitgestellt.

Gemäß einer bevorzugten Ausgestaltung ist die Magnetfeldvorrichtung ein Permanentmagnet, welcher ortsfest oder bewegbar sein kann. Alternativ oder zusätzlich umfasst die Magnetfeldvorrichtung ferner einen elektrische Spule. Der Permanentmagnet kann beispielsweise beweglich angeordnet sein und für eine Versteifung der magnetorheologischen Flüssigkeit in die Nähe der magnetorheologischen Flüssigkeit bewegt werden. Sobald die Transportaufgabe beendet ist, wird der Permanentmagnet wieder von der magnetorheologischen Flüssigkeit wegbewegt, so dass die Versteifung wieder aufgehoben wird. Alternativ kann der Permanentmagnet auch ortsfest angeordnet sein und zusätzlich ein elektrischer Leiter in der Nähe des Permanentmagneten angeordnet sein, so dass bei Anlegen einer Spannung an den elektrischen Leiter das magnetische Feld des Permanentmagneten aufgehoben wird oder abgeschwächt wird und so die Eigenschaften der magnetorheologischen Flüssigkeit geändert werden.

Besonders bevorzugt ist die Magnetfeldvorrichtung parallel zu einer Förderstrecke des Transportbandes, z.B. einem Untertrum, angeordnet.

Gemäß einer alternativen Ausführung nicht Teil der Erfindung, ist die flexible Schicht an einem Greifer angeordnet, welcher die zu transportierenden Gegenstände greift. Hierbei sind insbesondere die Greiferbacken des Greifers mit der magnetorheologischen Flüssigkeit ausgestattet, um ein sicheres Greifen des Gegenstandes zu ermöglichen. Besonders bevorzugt umfasst der Greifer dabei zwei einander gegenüberliegende Arme, welche jeweils mit der flexiblen Schicht ausgestattet sind.

Gemäß einer weiteren Ausgestaltung der Erfindung wird eine Transportanordnung vorgeschlagen, welche eine erfindungsgemäße Transportvorrichtung aufweist sowie eine Übergabevorrichtung. Die Übergabevorrichtung ist eingerichtet, ein Produkt auf das erste Transportband derart zu übergeben, dass das Produkt mit einer definierten Kraft auf die Oberfläche des Transportbandes andrückbar ist. Hierdurch wird sichergestellt, dass das Produkt mit einer ausreichenden Kraft übergeben wird und sicher am Transportband anhaftet und die Vielzahl von Mikrostrukturen die jeweiligen notwendigen Van-der-Waals-Kräfte bereitstellen können.

Vorzugsweise umfasst die Transportanordnung als Übergabevorrichtung ein zweites Transportband, welches unterhalb des ersten Transportbandes und vertikal und horizontal versetzt zum ersten Transportband angeordnet ist. Hierdurch ergibt sich ein sich überschneidender Produktübergabebereich, wobei ein Vertikalabstand zwischen dem ersten und zweiten Transportband derart gewählt ist, dass ein Produkt mit einer definierten Kraft vom zweiten Transportband auf das erste Transportband übergebbar ist. Somit kann eine einfach aufgebaute und kostengünstige Übergabevorrichtung bereitgestellt werden. Weiterhin kann die Übergabekraft einfach eingestellt werden, indem beispielsweise das erste und/oder zweite Transportband mit einer anderen Spannung versehen wird.

Gemäß einer bevorzugten Alternative umfasst die Übergabevorrichtung für die Transportbandanordnung ein zweites und ein drittes Transportband. Dabei ist das zweite Transportband in Reihe zum ersten Transportband angeordnet, d.h., das zweite Transportband ist dem ersten Transportband in Reihe vorgeschaltet, und das dritte Transportband ist parallel zum ersten und zweiten Transportband angeordnet. Dabei überdeckt das dritte Transportband sowohl das erste als auch das zweite Transportband zumindest teilweise. Somit wird eine Übergabe eines Produkts derart realisiert, dass das Produkt zuerst zwischen dem zweiten und dritten Transportband eingeklemmt ist und in Transportrichtung gefördert wird und dann vom zweiten Transportband auf das erste Transportband übergeben wird, wobei das Produkt zuerst noch zwischen dem zweiten und dritten Transportband und dann dem dritten und ersten Transportband geklemmt ist. Durch das Klemmen wird eine Andrückkraft vom dritten Transportband auf das Produkt und an das erste Transportband ausgeübt und somit die Aktivierung des Adhäsionsprinzips zwischen dem Produkt und dem ersten Transportband erreicht. Besonders bevorzugt sind dabei das erste, zweite und dritte Transportband derart angeordnet, dass eine seitliche Produktübergabe erfolgt. Insbesondere sind die drei Transportbänder dabei im Wesentlichen vertikal, besonders bevorzugt exakt vertikal, angeordnet.
Ferner betrifft die vorliegende Erfindung eine Verwendung einer magnetorheologischen Flüssigkeit in einer Transportvorrichtung nach Anspruch 1. Hierdurch können auf überraschend einfache Weise vielfältige Transportaufgaben gelöst werden und insbesondere eine erhöhte Flexibilität der Transportanordnung erreicht werden, ohne dass eine Formatumstellung zum Transport von Gegenständen mit unterschiedlichen geometrischen Formaten notwendig ist. Ferner betrifft die vorliegende Erfindung vorzugsweise die Verwendung einer mikrostrukturierten Oberfläche mit einer Vielzahl von vorstehenden Bereichen, die in einem Bereich von 1 bis 1000 µm vorstehen, an einem Transportband einer Transportvorrichtung in Verbindung mit einer magnetorheologischen Schicht.
Somit wird erfindungsgemäß zum ersten Mal vorgeschlagen, derartige Mikrostrukturen an einem Transportband zu verwenden, wodurch sich viele überraschende Vorteile bei der Lösung von Transportaufgaben mit Transportbändern ergeben.

### Zeichnung

Nachfolgend werden bevorzugte Ausführungsbeispiele der Erfindung unter Bezugnahme auf die begleitende Zeichnung im Detail beschrieben, wobei gleiche bzw. funktional gleiche Teile mit den gleichen Bezugszeichen bezeichnet sind. In der Zeichnung ist:
- Figur 1: eine schematische, perspektivische Ansicht einer Transportvorrichtung gemäß einem ersten Ausführungsbeispiel der Erfindung,
- Figur 2: eine schematische, geschnittene Ansicht der Transportvorrichtung von Figur 1,
- Figuren 3 bis 6: Transportvorrichtungen gemäß einem zweiten, dritten, vierten und fünften Ausführungsbeispiel,
- Figur 7: eine schematische Schnittansicht einer Transportvorrichtung gemäß einem sechsten Ausführungsbeispiel der Erfindung, und
- Figuren 8 und 9: Ansichten einer Transportvorrichtung gemäß einem siebten Ausführungsbeispiel der Erfindung.

Bevorzugte Ausführungsformen der Erfindung

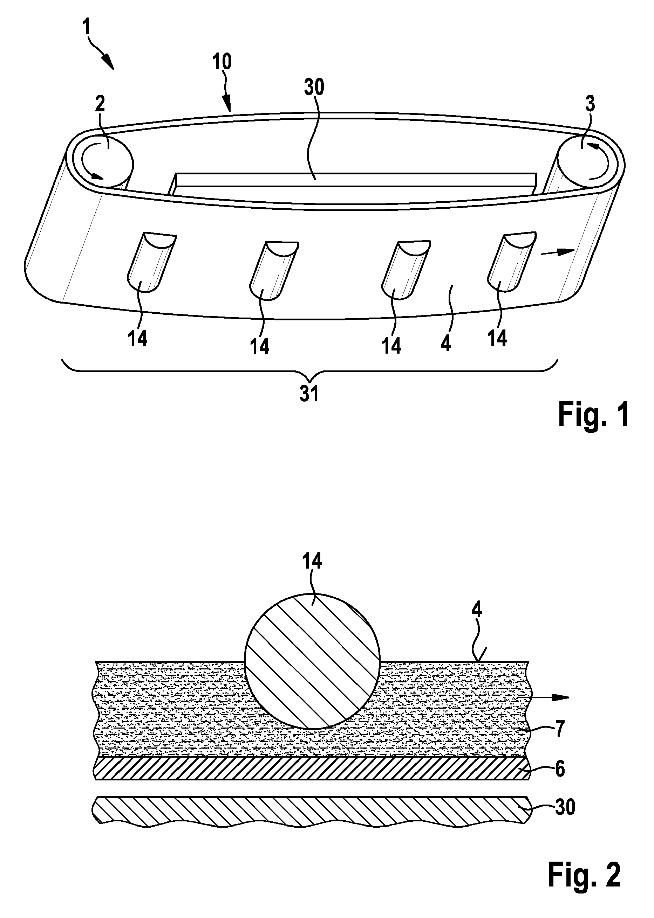

Nachfolgend wird unter Bezugnahme auf die Figuren 1 und 2 eine Transportvorrichtung 1 gemäß einem ersten Ausführungsbeispiel der Erfindung im Detail beschrieben.

Wie aus Figur 1 ersichtlich ist, ist die Transportvorrichtung 1 des ersten Ausführungsbeispiels ein umlaufendes Transportband 10, welches um eine erste und zweite Umlenkrolle 2, 3 herumgeführt ist.

Wie insbesondere aus Figur 2 ersichtlich ist, umfasst das Transportband 10 einen Tragriemen 6, an dessen zur Außenseite gerichteten Seite eine flexible Schicht 7 mit einer magnetorheologischen Flüssigkeit angeordnet ist. Wie die Figuren 1 und 2 verdeutlichen, kann die flexible Schicht 7, wenn ein Gegenstand 14 gegen die Oberfläche 4 der flexiblen Schicht 7 gedrückt wird, sich der geometrischen Form des Gegenstands 14 anpassen.

In diesem Ausführungsbeispiel ist der Gegenstand 14 zylinderförmig, beispielsweise ein zylinderförmiger Glasbehälter für Medikamente, welcher gegen die Oberfläche der flexiblen Schicht 7 gedrückt wird, so dass die flexible Schicht 7 den Zylinderkörper des Gegenstands 14 teilweise umschließt. Anschließend wird die Magnetfeldvorrichtung 30 aktiviert, so dass die Viskosität der magnetorheologischen Flüssigkeit geändert wird, und der Gegenstand 14 sicher in der jeweils flexiblen Schicht 7 gehalten wird.

Wie aus Figur 1 ersichtlich ist, ist in diesem Ausführungsbeispiel die Magnetfeldvorrichtung 30 nur an einem Teilbereich des Transportbandes 10 angeordnet, nämlich an dem eine Förderstrecke 31 bildenden Teilbereich, welcher zur Förderung der Gegenstände 14 verwendet wird, so dass nicht das gesamte Transportband 10 durch die Magnetfeldvorrichtung 30 versteift wird. Hierdurch können Probleme an den Umlenkrollen 2, 3 vermieden werden. Sobald der Gegenstand außerhalb des von der Magnetfeldvorrichtung 30 erzeugten Magnetfeldes gelangt, wird die Versteifung (Viskositätsänderung) der magnetorheologischen Flüssigkeit rückgängig gemacht und der Gegenstand kann problemlos aus der wieder sehr flexiblen Schicht 7 entnommen werden und z.B. einer Verpackungsmaschine oder einer Abfüllvorrichtung zugeführt werden.

Durch die erfindungsgemäße Idee können somit Gegenstände 14 mit verschiedensten geometrischen Formen problemlos mit dem gleichen Transportband transportiert werden. Eine Umrüstung oder dgl. ist nicht notwendig, so dass Rüstzeiten und Stillstandszeiten von Maschinen nicht anfallen. Somit kann eine schnelle Formatumstellung auf Gegenstände mit anderen geometrischen Formaten ermöglicht werden.

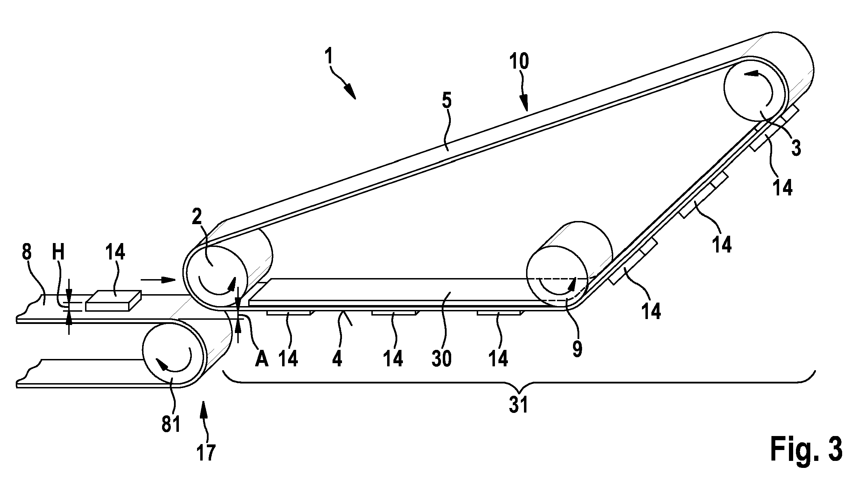

Die Figuren 3 bis 7 zeigen ein zweites bis sechstes Ausführungsbeispiel der Erfindung.

Nachfolgend wird unter Bezugnahme auf Figur 3 eine Transportvorrichtung 1 mit einem erfindungsgemäßen Transportband 10 gemäß einem zweiten Ausführungsbeispiel beschrieben. Die Transportvorrichtung 1 umfasst ferner eine erste und eine zweite Umlenkrolle 2, 3 sowie eine Spannrolle 9. Das umlaufende Transportband 10 weist an einer zur Außenseite gerichteten Oberfläche eine Vielzahl von Mikrostrukturen 5 auf, welche eine Vielzahl von vorstehenden Bereichen im Mikrometerbereich (zwischen 1 und 1000 µm) aufweisen. Unter den Mikrostrukturen ist eine Schicht mit einer magnetorheologischen Flüssigkeit angeordnet. Weiterhin ist entlang einer Förderstrecke 31 eine Magnetfeldvorrichtung 30 angeordnet. Das Bezugszeichen 8 bezeichnet ein Zufuhrband, mit welchem Produkte 14 zur erfindungsgemäßen Transportvorrichtung 1 zugeführt werden.

Durch die Mikrostrukturen 5 auf der Oberfläche 4 des Transportbandes 10 können Gegenstände aufgrund der zwischen dem Gegenstand und den Mikrostrukturen auftretenden Van-der-Waals-Kräfte an der Oberfläche des Transportbandes 10 anhaften. Hierbei ergeben sich durch die Vielzahl von vorstehenden Bereichen (mehrere Millionen) eine ausreichende Haltekraft, obwohl jeder vorstehende Bereich nur eine winzige Haltekraft bereitstellt, aber die Summe aller winzigen Haltekräfte es ermöglicht, ein Produkt, wie in Figur 1 gezeigt, kopfüber zu transportieren. Zusätzlich wird der Gegenstand durch den Formschluss, erzeugt durch die magnetorheologische Flüssigkeit, gehalten.

Eine Übergabe des Produkts 14 von dem Zuführband 8 auf das Transportband 10 erfolgt dabei an einem Produktübergabebereich 17 derart, dass an der Umlenkrolle 81 ein senkrechter Abstand A zwischen der Umlenkrolle 81 und der ersten Umlenkrolle 2 minimal kleiner ist als eine Produkthöhe H, so dass eine Andrückkraft während des Durchlaufens des Produkts 14 zwischen den beiden Umlenkrollen erzeugt wird. Hierdurch haftet das Produkt 14 besonders gut an dem Transportband 10.

Somit kann erfindungsgemäß eine Förderung von Produkten 14 an einem Untertrum des Transportbandes 10 ermöglicht werden, wodurch insbesondere bei Formatumstellungen kein Wechsel des Transportbandes notwendig ist. Somit kann die erfindungsgemäße Transportvorrichtung 1 für verschiedenste Produkte 14 verwendet werden, auch wenn diese unterschiedliche Größen und/oder unterschiedliche Geometrien aufweisen. Ferner können mittels der vorliegenden Erfindung insbesondere auch Übergaben von Produkten 14 von unten nach oben ermöglicht werden. Weiterhin wird insbesondere auch die Flexibilität der Positionierung der erfindungsgemäßen Transportvorrichtung, insbesondere in Verbindung mit Abfüll- und/oder Verpackungsmaschinen deutlich vereinfacht.

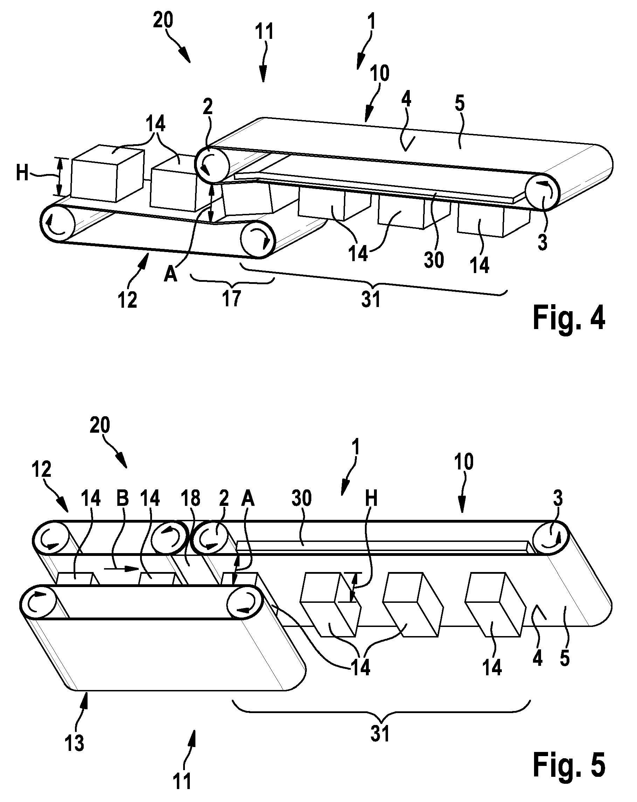

Figur 4 zeigt eine Transportvorrichtung 1 gemäß einem dritten Ausführungsbeispiel der Erfindung. Die Transportvorrichtung 1 des vierten Ausführungsbeispiels umfasst ein erfindungsgemäßes Transportband 10 sowie eine Übergabevorrichtung 11. Die Übergabevorrichtung 11 umfasst im dritten Ausführungsbeispiel ein zweites Transportband 12. Das zweite Transportband 12 ist unterhalb des ersten Transportbandes 10 angeordnet und ferner horizontal versetzt zum ersten Transportband 10. Dadurch wird ein sich überschneidender Produktübergabebereich 17 erhalten, an welchem das erste Transportband 10 und das zweite Transportband 12 übereinander angeordnet sind. Hierbei ist ein Abstand A zwischen dem ersten und zweiten Transportband kleiner als eine maximale Produkthöhe H. Hierdurch wird sichergestellt, dass, wenn das Produkt 14 in den Produktübergabebereich 17 gefördert wird, durch die zweite Transportvorrichtung 20 eine Andrückkraft auf das Produkt 14 ausgeübt wird. Hierdurch haftet das Produkt 14 besser an der mit Mikrostrukturen 5 versehenen Oberfläche 4 des ersten Transportbandes 10 an. Somit wird durch die Übergabevorrichtung 11 eine sichere Übergabe des Produktes 14 vom Obertrum des zweiten Transportbandes 12 auf das Untertrum des ersten Transportbandes 10 erreicht.

Figur 5 zeigt eine Transportvorrichtung 1 gemäß einen vierten Ausführungsbeispiel der Erfindung. Auch das vierte Ausführungsbeispiel umfasst eine Übergabevorrichtung 11 zur Übergabe der Produkte 14 auf das erste Transportband 10. Die Übergabevorrichtung 11 umfasst ein zweites Transportband 12 und ein drittes Transportband 13. Die drei Transportbänder 10, 12, 13 sind dabei in vertikaler Richtung angeordnet, so dass eine seitliche Übergabe möglich ist. Wie aus Figur 5 ersichtlich ist, ist das zweite Transportband 12 in Reihe vor dem ersten Transportband 10 angeordnet. Das dritte Transportband 13 ist parallel zum ersten und zweiten Transportband angeordnet. Hierbei überdeckt das dritte Transportband 13 sowohl das erste als auch das zweite Transportband zumindest teilweise. Somit ergibt sich ein seitlicher Überlappungsbereich sowohl mit dem ersten Transportband 10 als auch dem zweiten Transportband 12. Die Produkte 14 werden dabei zwischen dem zweiten Transportband 12 und dem dritten Transportband 13 durch Einklemmen zwischen die beiden Transportbänder in Pfeilrichtung B transportiert. Zwischen dem zweiten Transportband 12 und dem ersten Transportband 10 ist ein Überbrückungselement 18 angeordnet, wobei die Produkte 14 mittels des dritten Transportbandes 13 über das Überbrückungselement 18 geschoben werden. Um wieder ein Andrücken der Produkte 14 mit einer definierten Kraft an das erste Transportband 10 zu erreichen, ist ein Abstand A zwischen dem dritten Transportband 13 und dem ersten Transportband 10 kleiner gewählt als eine Höhe H der Produkte 14. Hierdurch wird ein definiertes Anhaften der Produkte 14 an der Oberfläche 4 mittels der Mikrostrukturen 5 am ersten Transportband 10 erreicht. Die Transportbänder 10, 12, 13 des vierten Ausführungsbeispiels sind exakt in vertikaler Richtung ausgerichtet. Es sei jedoch angemerkt, dass die Transportbänder auch gekippt werden können, d.h., in einem beliebigen gleichen Winkel bezüglich einer horizontalen Ebene angeordnet sein können.

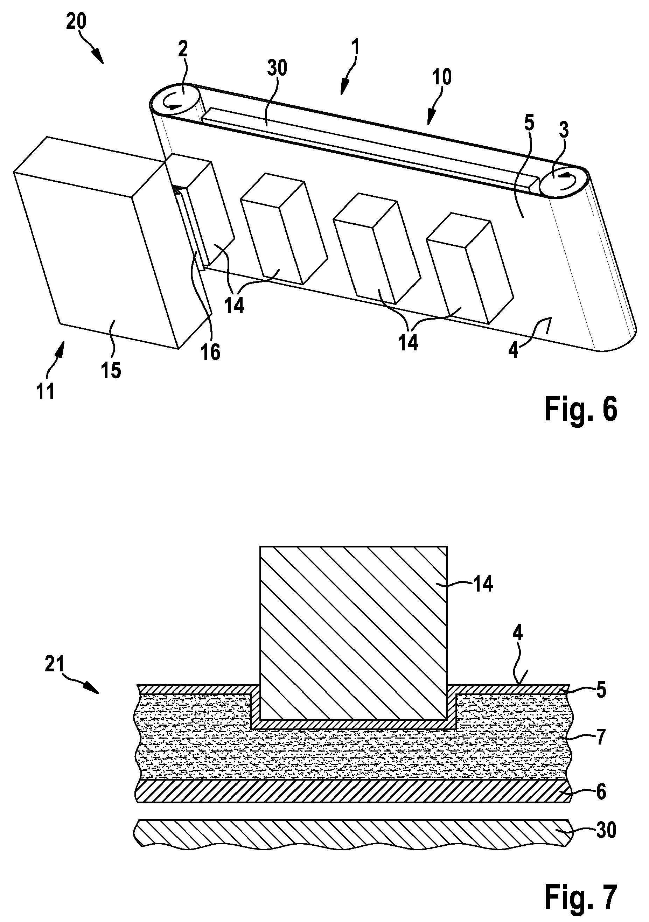

Figur 6 zeigt eine Transportvorrichtung 1 gemäß einem fünften Ausführungsbeispiel der Erfindung. Diese Transportvorrichtung 1 umfasst ebenfalls eine Übergabevorrichtung 11, welche im fünften Ausführungsbeispiel jedoch ein Aktuator 15 ist, welcher ein Andrückelement 16 betätigt. Hierdurch werden die Produkte 14 mittels des Andrückelements 16 gegen das vertikal angeordnete Transportband 10 mit einer definierten Kraft gedrückt. Hierdurch haften die Produkte 14 wiederum sehr gut an der Oberfläche des Transportbandes 10 an und es kann eine einfache seitliche Übergabe realisiert werden.

Figur 7 zeigt ein Transportband für eine Transportvorrichtung gemäß einem sechsten Ausführungsbeispiel der Erfindung. Die flexible Schicht 7 ist dabei zwischen der äußeren Schicht mit Mikrostrukturen 5 und einem Trageriemen 6 angeordnet. Hierdurch weist das Transportband 21 bei hoher Stabilität eine bessere Anpassungsfähigkeit an geometrische Formen der Produkte 14 auf, wobei, wie in Figur 7 gezeigt, ein teilweises Umschließen des Produkts 14 möglich ist. Durch Anlegen eines Magnetfeldes kann die flexible Schicht zähflüssiger werden und das Produkt 14 sicher gehalten werden. Hierdurch können insbesondere Produkte mit gerundeten oder runden Außenflächen, wie z.B. Flaschen, besser gehalten werden.

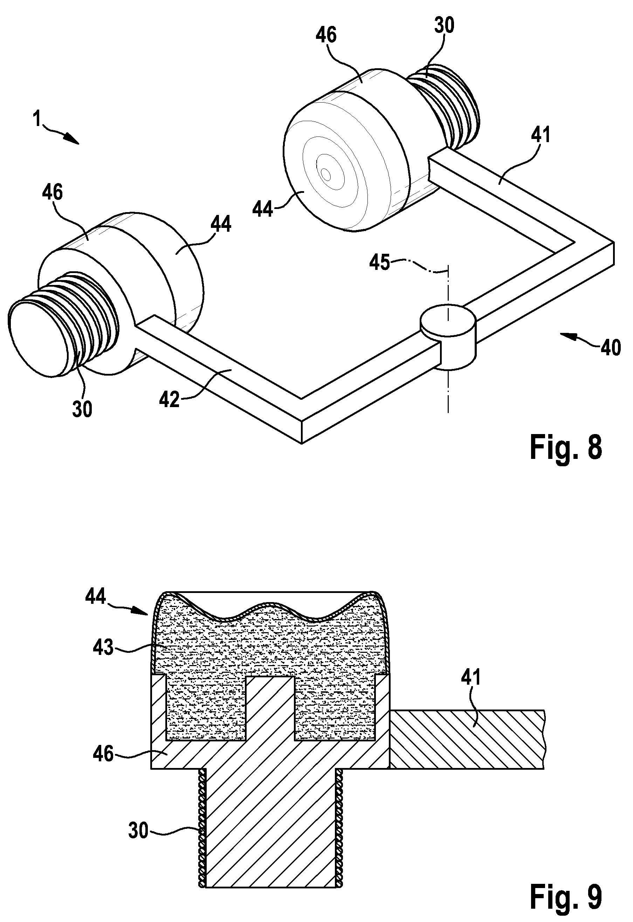

Die Figuren 8 und 9 zeigen eine Transportvorrichtung 1 gemäß einem siebten Ausführungsbeispiel der Erfindung. Wie aus den Figuren 8 und 9 ersichtlich ist, ist die Transportvorrichtung 1 des siebten Ausführungsbeispiels ein Greifer 40 mit einem ersten Greifarm 41 und einem zweiten Greifarm 42. Am Ende jedes Greifarms 41, 42 ist jeweils eine mittels einer Membran 44 abgedeckte flexible Schicht 43 angeordnet. Der erste und zweite Greifarm 41, 42 sind um eine Drehachse 45 gegeneinander verdrehbar. Hierdurch können Gegenstände (nicht gezeigt) zwischen den beiden flexiblen Schichten 43 am Ende der Greifarme 41, 42 gegriffen werden.

Die Greifarme 41, 42 sind gleich aufgebaut, wobei, wie in Figur 9 gezeigt, der Greifarm 41 an einem Gehäuse 46 angelegt ist, welcher die flexible Schicht 43 hält. An dem der flexiblen Schicht 43 entgegengesetzten Ende des Gehäuses 46 ist eine Magnetfeldvorrichtung 30 in Form einer Spule angeordnet. Wenn die Spule bestromt wird, wird die flexible Schicht 43, welche wie in den vorhergehenden Ausführungsbeispielen mit einer magnetorheologischen Flüssigkeit gefüllt ist, versteift, so dass ein zwischen den Greifarmen 41, 42 gehaltener Gegenstand sicher durch die Greifarme gegriffen werden kann.

Nach Beendigung der Transportaufgabe wird die Bestromung der Spulen an den beiden Greifarmen 41, 42 beendet, so dass die magnetorheologische Flüssigkeit wieder in ihren flüssigen Ausgangszustand zurückkehrt, so dass die Greifarme 41, 42 geöffnet werden können und der dazwischen gegriffene Gegenstand freigegeben wird. Es sei angemerkt, dass der Greifer 40 verschiedene Transportaufgaben für einzelne Gegenstände durchführen kann. Durch die Verwendung der flexiblen Schichten 43 am Ende der beiden Greifarme 41, 42, können somit Gegenstände mit verschiedensten geometrischen Formen sicher gegriffen und freigegeben werden.

## Patentansprüche

1. Transportvorrichtung, umfassend:
- eine Magnetfeldvorrichtung (30) zur Erzeugung eines Magnetfelds,
und
- eine flexible Schicht (7; 43) zum Transport von Gegenständen (14),
- wobei die flexible Schicht eine magnetorheologische Flüssigkeit umfasst, und
- wobei die magnetorheologische Flüssigkeit mittels der Magnetfeldvorrichtung (30) magnetisierbar ist, derart, dass sich eine Viskosität der magnetorheologischen Flüssigkeit derart ändert, um zu transportierende Gegenstände (14) zumindest teilweise zu umschließen,
**dadurch gekennzeichnet, dass** die flexible Schicht (7) an einem Transportband (10) angeordnet ist.

2. Transportvorrichtung nach Anspruch 1, **dadurch gekennzeichnet, dass** die Magnetfeldvorrichtung (30) derart angeordnet ist, dass nur Teilbereiche der magnetorheologischen Flüssigkeit magnetisierbar sind.

3. Transportvorrichtung nach einem der vorhergehenden Ansprüche, **dadurch gekennzeichnet, dass** die flexible Schicht (7; 43) eine Oberfläche (4) mit einer Vielzahl von Mikrostrukturen (5) mit vorstehenden Bereichen aufweist, derart, dass bei Kontakt der Oberfläche (4) mit einem Gegenstand (14) der Gegenstand aufgrund der auftretenden Van-der-Waals-Kräfte an der Oberfläche (4) anhaftet.

4. Transportvorrichtung nach einem der vorhergehenden Ansprüche, **dadurch gekennzeichnet, dass** die Magnetfeldvorrichtung (30) einen Permanentmagneten umfasst und/oder dass die Magnetfeldvorrichtung (30) eine elektrische Spule umfasst.

5. Transportvorrichtung nach einem der vorhergehenden Ansprüche, **dadurch gekennzeichnet, dass** das Transportband (10) einen Tragriemen (6) umfasst.

6. Transportvorrichtung nach Anspruch 5, **dadurch gekennzeichnet, dass** die Magnetfeldvorrichtung (30) parallel zu einer Förderstrecke (31) des Transportbandes (10) angeordnet ist.

7. Transportanordnung, umfassend:
- eine Transportvorrichtung nach einem der vorhergehenden Ansprüche, und
- eine Übergabevorrichtung (11), welche eingerichtet ist, einen Gegenstand (14) auf das erste Transportband (10) derart zu übergeben, dass der Gegenstand (14) mit einer definierten Kraft auf die Oberfläche (4) des ersten Transportbandes (10) andrückbar ist.

8. Transportanordnung nach Anspruch 7, **dadurch gekennzeichnet, dass** die Übergabevorrichtung ein zweites Transportband (12) umfasst, welches derart unterhalb des ersten Transportbandes (10) angeordnet ist, dass zwischen dem ersten und zweiten Transportband ein sich überdeckender Produktübergabebereich (17) vorhanden ist, wobei ein vertikaler Abstand (A) zwischen dem ersten Transportband (10) und dem zweiten Transportband (12) derart gewählt ist, dass ein Gegenstand mit einer definierten Kraft vom zweiten Transportband (12) auf das erste Transportband (10) übergebbar ist.

9. Transportanordnung nach Anspruch 7, **dadurch gekennzeichnet, dass** die Übergabevorrichtung (11) ein zweites Transportband (12) und ein drittes Transportband (13) umfasst, wobei das zweite Transportband (12) in Reihe zum ersten Transportband vor dem ersten Transportband (10) angeordnet ist und das dritte Transportband (13) parallel zum ersten und zweiten Transportband (10, 12) angeordnet ist, wobei das dritte Transportband (13) sowohl das erste Transportband (10) als auch das zweite Transportband (12) zumindest teilweise überdeckt und das erste, zweite und dritte Transportband (10, 12, 13) im Wesentlichen in vertikaler Richtung angeordnet sind, um eine seitliche Übergabe des Gegenstands (14) zu ermöglichen.

10. Transportanordnung nach Anspruch 7, **dadurch gekennzeichnet, dass** die Übergabevorrichtung (11) einen Aktuator (15) und ein Andrückelement (16) umfasst, welches vom Aktuator (15) betätigbar ist, um einen Gegenstand gegen das erste Transportband (10) zu drücken.

11. Verwendung einer magnetorheologischen Flüssigkeit in einer Transportvorrichtung (1) nach Anspruch 1.

## Claims

1. Transport device, comprising:
- a magnetic field device (30) for generating a magnetic field, and
- a flexible layer (7; 43) for transporting objects (14),
- wherein the flexible layer comprises a magnetorheological fluid, and
- wherein the magnetorheological fluid can be magnetized by means of the magnetic field device (30) such that a viscosity of the magnetorheological fluid is altered in order to enclose at least partially objects (14) that are to be transported,
**characterized in that** the flexible layer (7) is arranged on a transport belt (10).

2. Transport device according to Claim 1, **characterized in that** the magnetic field device (30) is arranged in such a way that only subregions of the magnetorheological fluid are magnetizable.

3. Transport device according to one of the preceding claims, **characterized in that** the flexible layer (7; 43) has a surface (4) with a multiplicity of microstructures (5) with protruding regions such that, when the surface (4) is in contact with an object (14), the object adheres to the surface (4) as a result of the van der Waals forces occurring.

4. Transport device according to one of the preceding claims, **characterized in that** the magnetic field device (30) comprises a permanent magnet and/or **in that** the magnetic field device (30) comprises an electrical coil.

5. Transport device according to one of the preceding claims, **characterized in that** the transport belt (10) comprises a carrying belt (6).

6. Transport device according to Claim 5, **characterized in that** the magnetic field device (30) is arranged parallel to a conveying section (31) of the transport belt (10).

7. Transport arrangement, comprising:
- a transport device according to one of the preceding claims, and
- a transfer device (11), which is designed to transfer an object (14) to the first transport belt (10) such that the object (14) can be pressed with a defined force onto the surface (4) of the first transport belt (10).

8. Transport arrangement according to Claim 7, **characterized in that** the transfer device comprises a second transport belt (12), which is arranged underneath the first transport belt (10) such that there is an overlapping product transfer region (17) between the first and second transport belts, wherein the vertical distance (A) between the first transport belt (10) and the second transport belt (12) is chosen such that an object can be transferred with a defined force from the second transport belt (12) onto the first transport belt (10).

9. Transport arrangement according to Claim 7, **characterized in that** the transfer device (11) comprises a second transport belt (12) and a third transport belt (13), wherein the second transport belt (12) is arranged ahead of the first transport belt (10) in series with the first transport belt and the third transport belt (13) is arranged parallel to the first and second transport belts (10, 12), wherein the third transport belt (13) at least partially overlaps both the first transport belt (10) and the second transport belt (12) and the first, second and third transport belts (10, 12, 13) are arranged substantially in the vertical direction in order to make a lateral transfer of the object (14) possible.

10. Transport arrangement according to Claim 7, **characterized in that** the transfer device (11) comprises an actuator (15) and a pressure-applying element (16), which can be actuated by the actuator (15) in order to press an object against the first transport belt (10).

11. Use of a magnetorheological fluid in a transport device (1) according to Claim 1.

## Revendications

1. Dispositif de transport, comprenant :
- un dispositif de champ magnétique (30) pour produire un champ magnétique ; et
- une couche flexible (7 ; 43) pour transporter des objets (14) ;
- la couche flexible comprenant un fluide magnéto-rhéologique ; et
- le fluide magnéto-rhéologique pouvant être aimanté à l'aide du dispositif de champ magnétique (30), de telle sorte qu'une viscosité du fluide magnéto-rhéologique peut varier de façon à englober au moins en partie des objets (14) à transporter,
**caractérisé en ce que** :
- la couche flexible (7) est disposée au niveau d'un tapis de transport (10).

2. Dispositif de transport selon la revendication 1, **caractérisé en ce que** le dispositif de champ magnétique (30) est disposé de telle sorte que seules des régions partielles du fluide magnéto-rhéologique peuvent être aimantées.

3. Dispositif de transport selon l'une quelconque des revendications précédentes, **caractérisé en ce que** la couche flexible (7 ; 43) comporte une surface (4) avec une pluralité de microstructures (5) avec des régions saillantes, de telle sorte qu'en cas de contact de la surface (4) avec un objet (14), l'objet adhère à la surface (4) sur la base des forces de Van der Waals en présence.

4. Dispositif de transport selon l'une quelconque des revendications précédentes, **caractérisé en ce que** le dispositif de champ magnétique (30) comprend un aimant permanent et/ou que le dispositif de champ magnétique (30) comprend une bobine électrique.

5. Dispositif de transport selon l'une quelconque des revendications précédentes, **caractérisé en ce que** le tapis de transport (10) comprend une courroie de transport (6).

6. Dispositif de transport selon la revendication 5, **caractérisé en ce que** le dispositif de champ magnétique (30) est disposé parallèlement à un tronçon de transport (31) du tapis de transport (10).

7. Agencement de transport, comprenant :
- un dispositif de transport selon l'une quelconque des revendications précédentes ; et
- un dispositif de transfert (11) conçu pour transférer un objet (14) sur le premier tapis de transport (10) de telle sorte que l'objet (14) peut être appuyé avec une force définie sur la surface (4) du premier tapis de transport (10).

8. Agencement de transport selon la revendication 7, **caractérisé en ce que** le dispositif de transfert comprend un deuxième tapis de transport (12) disposé de telle sorte en dessous du premier tapis de transport (10) qu'une zone de transfert de produit (17) s'étendant entre le premier et le deuxième tapis de transport est présente, une distance verticale (A) entre le premier tapis de transport (10) et le deuxième tapis de transport (12) étant sélectionnée de telle sorte qu'un objet peut être transféré avec une force définie du deuxième tapis de transport (12) au premier tapis de transport (10).

9. Agencement de transport selon la revendication 7, **caractérisé en ce que** le dispositif de transfert (11) comprend un deuxième tapis de transport (12) et un troisième tapis de transport (13), le deuxième tapis de transport (12) étant disposé devant le premier tapis de transport (10) en ligne par rapport au premier tapis de transport et le troisième tapis de transport (13) étant disposé parallèlement aux premier et deuxième tapis de transport (10, 12), le troisième tapis de transport (13) recouvrant au moins en partie tant le premier tapis de transport (10) que le deuxième tapis de transport (12) et les premier, deuxième et troisième tapis de transport (10, 12, 13) étant disposés pour l'essentiel dans la direction verticale, pour permettre un transfert latéral de l'objet (14).

10. Agencement de transport selon la revendication 7, **caractérisé en ce que** le dispositif de transfert (11) comprend un actionneur (15) et un élément de compression (16) pouvant être actionné par l'actionneur (15), pour appuyer un objet contre le premier tapis de transport (10).

11. Utilisation d'un fluide magnéto-rhéologique dans un dispositif de transport (1) selon la revendication 1.
